(19) **Europäisches Patentamt / European Patent Office / Office européen des brevets**

(11) **EP 4 672 690 A1**

(12) **EUROPEAN PATENT APPLICATION**

(43) Date of publication:
**31.12.2025 Bulletin 2026/01**

(21) Application number: **25182898.4**

(22) Date of filing: **16.06.2025**

(51) International Patent Classification (IPC):
**H04L 41/0604** (2022.01)   **H04L 41/0654** (2022.01)
**H04L 41/16** (2022.01)   **H04L 41/5074** (2022.01)
**H04L 41/0631** (2022.01)

(52) Cooperative Patent Classification (CPC):
**H04L 41/0609; H04L 41/0654; H04L 41/16;**
H04L 41/0631; H04L 41/5074

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.06.2024 FI 20245825**

(71) Applicant: **Nokia Solutions and Networks Oy
02610 Espoo (FI)**

(72) Inventors:
• **CHEUNG, Benjamin**
  **Berkeley Heights, NJ, 07922 (US)**
• **BHAT, Neelam**
  **560087 Bangalore (IN)**

(74) Representative: **Nokia EPO representatives
Nokia Technologies Oy
Karakaari 7
02610 Espoo (FI)**

(54) **FAULT ESCALATION ENGINE**

(57)   A processing system includes a memory storing a program of instructions, and a processor coupled to the memory and configured to execute the program of instructions. The processor monitors a network, which includes a plurality of devices, for alarms generated by the plurality of devices. The alarms are associated with alarm conditions, and the processor assigns the alarm conditions associated with received alarms to escalation-type categories based on Support Vector Machine learning analysis of alarm characteristics of the alarm conditions. The processor also determines whether a first alarm condition associated with a first received alarm satisfies a first escalation criterion associated with a first escalation-type category to which the first alarm condition has been assigned, and triggers an escalation action in response to determining that the first alarm condition satisfies the first escalation criterion.

FIG. 3

**Description**

**TECHNICAL FIELD**

This application relates generally to fault management, and more particularly to a fault escalation engine.

**BACKGROUND**

In networks including a large number of network devices, proper fault management may be useful in maintaining satisfactory network performance. For example, wireless communications networks may include a large number of base stations, with each base station including a large number of network devices. Any or all of these network devices may generate alarms in response to the device detecting a fault or other alarm condition, and transmit the alarm to a local or system-wide fault management system. Each device may have the potential to generate multiple alarms, for example, an over temp alarm, a communication port failure, message receipt or transmission errors, synchronization errors, quality of service errors, power supply errors, or the like. With only a few devices, a human may be capable of recognizing failure patterns and severity of the received alarms to determine underlying fault conditions and make determinations about when a network device needs to be repaired or replaced. However, the human mind is not adapted to handle fault management in networks with a large number of devices without assistance.

In some instances, computer-implemented rules-based solutions have been implemented to automate the fault management process by hard-coding escalation decisions. For example, a particular alarm might be hard coded to escalate if it was encountered 10 or more times in an hour. With such a hard coded rule, an alarm that was encountered only 9 times within an hour would not be escalated. Such conventional techniques, however, may miss some alarms that should be escalated, while at the same time escalating some alarms that should not be escalated.

**SUMMARY**

The scope of protection sought for some example embodiments is set out by the independent claims. The example embodiments and/or features, if any, described in this specification that do not fall under the scope of the independent claims are to be interpreted as examples useful for understanding some embodiments.

In some example embodiments, fault conditions may be more intelligently escalated based on fault persistence, fault recovery, and/or fault repetition within a statistically meaningful confidence level. Fault conditions may exhibit problematic behavior, and may be difficult to detect or troubleshoot, especially in networks having a large number of nodes and/or devices. Use of intelligent fault escalation techniques and devices described herein may allow alarm conditions that are persistent, repeat, or defy recovery to be addressed more effectively due to, for example, increased ability to more accurately identify faults that should be escalated, while potentially achieving cost savings by not escalating detected faults unnecessarily.

In some example embodiments, an Escalation Engine applies machine learning data mining Support Vector Machine (SVM) techniques, statistical analysis (e.g. Confidence Intervals) and Analysis of Variance (ANOVA) to *intelligently* escalate faults that are encountered in a system. The Escalation Engine may include an Escalation Categorizer, Alarm Analytics, a Decision Engine, and an Execution Framework. The Escalation Categorizer may assign alarms to an escalation type (repetition, persistence, or recovery) using SVM. Alarm Analytics looks for meaningful patterns in alarm data in a radio access network (RAN) with many base transceiver stations (BTS). The Decision Engine considers the analytics and arrives at an escalation decision with a statistically meaningful confidence interval. The Execution Framework takes action to Escalate Alarms in a system.

In an example embodiment, a processing system includes a memory storing a program of instructions and a processor coupled to the memory. The processor is configured to execute the program of instructions to monitor a network including a plurality of devices for alarms generated by the plurality of devices, the alarms being associated with alarm conditions, assign alarm conditions associated with received alarms to escalation-type categories based on Support Vector Machine learning analysis of alarm characteristics of the alarm conditions, determine whether a first alarm condition associated with a first received alarm satisfies a first escalation criterion associated with a first escalation-type category to which the first alarm condition has been assigned, and trigger an escalation action in response to determining that the first alarm condition satisfies the first escalation criterion.

The processor may be further configured to execute the program of instructions to determine a confidence interval associated with a first alarm characteristic, the first alarm characteristic associated with the first escalation-type category, wherein the first escalation criterion is satisfied if a second alarm characteristic of the first received alarm is outside the confidence interval of the first alarm characteristic associated with the first escalation-type category.

In some example embodiments, the alarm characteristics of the alarm conditions include a number of times a particular alarm condition has occurred in a given time interval, a persistence of the particular alarm condition, and a number of times error recovery has been attempted for the particular alarm condition without resolving the particular alarm condition.

The processor may be further configured to execute the program of instructions to perform an Analysis of Variance across a plurality of escalation-type categories and determine whether a first alarm condition associated with the first received alarm is attributable to a plurality of different underlying causes based on the Analysis of Variance and/or determine which factor of a plurality of factors more strongly influences occurrence of the first alarm condition based on the Analysis of Variance.

The processor may be further configured to execute the program of instructions to store data associated with the received alarms, including information indicating escalation-type categories to which the received alarms have been assigned, devices associated with the received alarms, and alarm characteristics, and include the data associated with the received alarms to perform the Support Vector Machine learning analysis of alarm characteristics of future received alarms.

In some example embodiments, the processor is further configured to execute the program of instructions to obtain historical alarm data indicating occurrences of a plurality of historical alarm events, each of the plurality of historical alarm events associated with historical event parameters, and perform initial unsupervised training by assigning received alarms to escalation-type categories based on Support Vector Machine learning analysis of alarm characteristics of the historical alarm data.

The processor may be further configured to execute the program of instructions to trigger the escalation action by transmitting one or more messages to an escalation framework, wherein the one or more messages instruct the escalation framework to increase a criticality level assigned to the first alarm condition, initiate a recovery action associated with the first received alarm, or issue one or more Escalation alarms. In some example embodiments, the one or more Escalation alarms may be selected from a set of Escalation alarms.

The Escalation alarm may optionally indicate that an issue warranting further investigation by humans has been identified. For example, an Escalation alarm may be delivered to a particular person indicating that someone should "have a look." Alternatively or in addition, an Escalation alarm may be sent a central authority and indicate to the central authority that immediate action is required. An additional or alternative Escalation alarm may trigger a correlation analysis. It should be appreciated that "specialized" Escalation alarms and escalation of the criticality level of an alarm are not mutually exclusive, and some embodiments may issue an Escalation alarm and increase the criticality of an existing alarm.

In some example embodiments, the processor is further configured to execute the program of instructions to display, to an operator, information related to one or more of the alarm conditions, escalation actions, or system feedback provided to the processing system,

The processing system of claim 1, may be further configured to execute the program of instructions to display information related to one or more confidence attributes, escalation policies, or recovery definitions, receive input related to any or all of the confidence attributes, the escalation policies, or the recovery definitions, and update the confidence attributes, the escalation policies, and/or the recovery definitions based on the input. The escalation-type categories may include repetition escalation, persistence escalation, and recovery escalation. Escalation policies, in at least some example embodiments, may be used to define a set of specialized Escalation alarms.

In another example embodiment, a communication network includes a plurality of network nodes and a fault escalation engine coupled to the plurality of network nodes. The fault escalation engine includes a memory storing a program of instructions and a processor coupled to the memory and configured to execute the program of instructions. The processor of the fault escalation engine is configured to monitor the plurality of network nodes for alarms associated with alarm conditions, assign alarm conditions associated with received alarms to escalation-type categories based on Support Vector Machine learning analysis of alarm characteristics of the alarm conditions, determine whether a first alarm condition associated with a first received alarm satisfies a first escalation criterion associated with a first escalation-type category to which the first alarm condition has been assigned, and trigger an escalation action in response to determining that the first alarm condition satisfies the first escalation criterion.

In yet another example embodiment, a method includes monitoring a network including a plurality of devices for alarm messages generated by the plurality of devices, where the alarm messages are associated with alarm conditions. The alarm conditions associated with received alarm messages are assigned to escalation-type categories based on Support Vector Machine learning analysis of alarm characteristics of the alarm conditions. A determination is made regarding whether a first alarm condition associated with a first received alarm message satisfies a first escalation criterion associated with a first escalation-type category to which the first alarm condition has been assigned. An escalation action is triggered in response to determining that the first alarm condition satisfies the first escalation criterion.

Any or all of the above example embodiments, and other example embodiments disclosed herein, may be used in some combinations.

**BRIEF DESCRIPTION OF THE DRAWINGS**

Example embodiments will become more fully understood from the detailed description given herein below and the accompanying drawings, wherein like elements are represented by like reference numerals. The example embodiments are given by way of illustration only, and thus are not limiting of this disclosure.

FIG. 1 is a diagram of a network including an escalation engine, in accordance with example embodiments of the present disclosure;

FIG. 2 is table illustrating three different escalation-type categories, in accordance with example embodiments of the present disclosure;

FIG. 3 is a block diagram illustrating functional blocks/modules associated with an escalation engine, in accordance with example embodiments of the present disclosure;

FIG. 4 is a graph illustrating using Support Vector Machine learning to choose between two escalation-type categories when categorizing an alarm, in accordance with example embodiments of the present disclosure;

FIG. 5 is a graph illustrating using Support Vector Machine learning to choose among three escalation-type categories when categorizing an alarm, in accordance with example embodiments of the present disclosure;

FIG. 6 is diagram illustrating determining a confidence interval, in accordance with example embodiments of the present disclosure;

FIG. 7 is a flow diagram illustrating a method of triggering an escalation action, in accordance with example embodiments of the present disclosure;

FIG. 8 is a flow diagram illustrating a method performed by an escalation engine, in accordance with example embodiments of the present disclosure;

FIG. 9 is a flow diagram illustrating a method performed by a processing device to generate a dashboard graphical user interface (GUI) for use with an escalation engine, in accordance with example embodiments of the present disclosure;

FIG. 10 is a flow diagram illustrating a method of obtaining and updating confidence attributes, escalation policies, and/or the recovery definitions for use with an escalation engine, in accordance with example embodiments of the present disclosure; and

FIG. 11 is a block diagram illustrating a processing device, in accordance with example embodiments of the present disclosure.

It should be noted that these figures are intended to illustrate general characteristics of methods, structure and/or materials utilized in certain example embodiments, and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the drawings is intended to indicate the presence of a similar or identical element or feature.

**DETAILED DESCRIPTION**

Some example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and combinations, and should not be construed as limited to only the embodiments set forth herein.

Furthermore, it should be understood that there is no intent to limit example embodiments to the particular forms disclosed. On the contrary, example embodiments cover all modifications, equivalents, and alternatives falling within the scope of this disclosure. Like numbers refer to like elements throughout the description of the figures. One or more example embodiments described herein may be combined.

As used herein, the term "fault escalation," or simply "escalation," refers to how a system handles particularly problematic faults. Fault escalation techniques can help in troubleshooting a system. The various intelligent fault escalation techniques disclosed herein should be distinguished from hard coded escalation mechanisms. For example, using hard coded escalation techniques, if the frequency of occurrence of a device alarm exceeds a hard-coded limit, for example, 3 occurrences within one minute, that alarm would be escalated. By contrast, using intelligent fault escalation techniques in accordance with some example embodiments herein, if the frequency of occurrence of that same alarm exceeds 3 occurrences within one minute, the alarm may or may not be escalated.

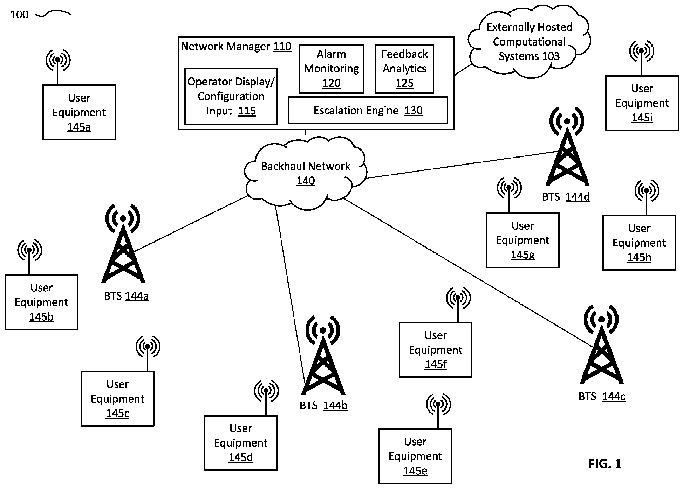

Referring first to FIG. 1, a diagram of a network 100 including an escalation engine 130 will be discussed in accordance with example embodiments of the present disclosure. Network 100 is a telecommunication network, such as a radio access network (RAN) including multiple base stations BTS 144a, BTS 144b, BTS 144c, and BTS 144d connected via fiber optic or other communication cables to backhaul network 140. User equipment (UE) 145a, 145b, 145c, 145d, 145e, 145f, 145g, 145h and 145i are in wireless communication with one or more of BTS 144a, BTS 144b, BTS 144c, and BTS 144d. Network 100 also includes network manager 110 connected to backhaul network 140 via a fiber optic or other high bandwidth and high speed communication channel. It will be appreciated that various techniques of interconnecting network nodes and devices are known to those of ordinary skill in the art of networking. It will also be appreciated that although a telecommunications network is illustrated FIG. 1, after considering the present disclosure various techniques and devices disclosed herein may be adapted for use in other network types.

Network manager 110 includes operator display/configuration input module 115, alarm monitoring module 120, feedback analytics module 125, and escalation engine 130. Each of the operator display/configuration input module 115, alarm monitoring module 120, feedback analytics module 125, and escalation engine 130 may be implemented using one or more processors configured to perform relevant functions by executing one or more programs of instructions. Each module/engine may also include fixed logic, dedicated processing hardware, acting independently or in conjunction with the programs of instructions to implement the various techniques described herein. Furthermore, any or all of the operator display/configuration input module 115, alarm monitoring module 120, feedback analytics module 125, or escalation engine 130 may employ externally hosted computational systems to perform some or all of their functions.

Operator display/configuration input module 115 may be used to receive input from an operator specifying, modifying, or selecting operational parameters, and provide that information to alarm monitoring module 120, feedback analytics module 125, or escalation engine 130. Operator display/configuration input module 115 may also be used to display alarm conditions, logs, histories, and/or other information germane to the operation of network 100.

Alarm monitoring module 120 may receive alarm messages generated by a device included in network 100. It will be appreciated that all network devices are not illustrated in FIG.1. For example, each of the base stations BTS 144a-BTS 144d may each include dozens of devices and/or subsystems, while UE 145a-i may include hundreds of devices. Each device or subsystem may be capable of generating alarms. These alarms may be locally monitored and aggregated by each base station, formatted into alarm messages, and transmitted from the base station to alarm monitoring module 120. Certain alarms, for example alarms defined by given (or, alternatively, defined or pre-determined) rules as critical or time-sensitive alarms may be transmitted individually, without being aggregated.

Alarm messages received by alarm monitoring module 120 may include an alarm identifier and/or one or more alarm characteristics. The alarm identifier will, in general, be associated with a particular alarm condition. For example, if the temperature of a compute core in BTS 144a begins to experience an over-temp condition at 1:03 pm, the compute core may set an over-temp alarm. The base station BTS 144a may become aware of the over-temp alarm set by the compute core by passively or actively monitoring a dedicated alarm circuit, receiving an internal alarm message generated by the rack in which the compute core is located, or using another suitable alarm monitoring method. An alarm processing subsystem of BTS 144a (not illustrated) may then generate an alarm reporting message reporting the over-temp alarm to alarm monitoring module 120 of network manager 110. It will be appreciated that various techniques for determining when an alarm has been issued, and which device is associated with an issued alarm, are known to those of ordinary skill in the art.

Continuing with the previous example, the alarm reporting message may include one or more of the following: an alarm identifier, which identifies the alarm as an over-temp alarm; a device identifier, which identifies the particular compute core associated with the alarm; and an alarm start time. Other information may also be included in the alarm reporting message, for example: an alarm duration, a current alarm severity/criticality level, or the like. However, in at least one example embodiment, the network manager 110 may determine information like the alarm duration based on information included in multiple alarm reporting messages.

For example, a first alarm reporting message may be sent indicating an activation time of the over-temp alarm, and a second alarm reporting message may be sent indicating a deactivation time of the over-temp alarm. The duration of the over-temp alarm can be determined by the difference between the activation and deactivation times of the over-temp alarm. Thus, an alarm characteristic of a particular alarm, e.g. alarm duration, may be explicitly included in an alarm message received by alarm monitoring module 120, or determined based on information included in multiple different alarm messages.

As used herein, unless otherwise required by context or explicitly noted, the term "alarm" refers to a particular alarm designation/identifier, e.g. alarm 102, or over-temp alarm. The term "alarm condition" refers to the underlying fact that gave rise to the alarm. For example the alarm condition is a rise in temperature above a threshold level, and the alarm is an over-temp alarm. The term "alarm characteristic" refers to an attribute of the alarm. For example, a persistence characteristic of an alarm may refer to how long a particular alarm remains active; a repetition characteristic of an alarm may refer to how often the alarm occurs within a given period of time, and a recovery characteristic of an alarm may refer to how many times the alarm re-occurs after a corrective action has been applied.

In some example embodiments, feedback analytics module 125, receives information from one or more sources, including escalation engine 130, where the received information is related to actions taken by escalation engine 130, for example the effects of those actions on individual devices and the network 100 as a whole. In some example embodiments, the feedback analytics module 125 tracks outcomes against actions that have been taken by the escalation engine 130. In some example embodiments, if the escalation engine 130 escalates an alarm associated with a particular network device based on recurrence of the alarm even after previous recovery attempts, the feedback analytics module 125 may provide feedback information identifying the two potentially contributing underlying causes to a technician attempting to troubleshoot the alarm. If an Analysis of Variance (ANOVA) indicates two potentially contributing underlying causes of that same alarm, the technician may also be notified about two potentially contributing underlying causes. The feedback analytics module 125 may also receive technician feedback regarding actions taken by the technician to resolve the alarm, and provide them to the escalation engine 130.

The escalation engine 130 receives alarm information from alarm monitoring module 120, including an alarm identifier, information sufficient to determine an alarm condition associated with the alarm identifier, information identifying a device associated with the alarm, and information sufficient to determine a characteristic of the alarm. Escalation engine 130 categorizes the alarm into an escalation type based on the alarm characteristic. In at least one example embodiment three escalation-type categories are used: repetition, persistence, and recovery. Escalation categories will be discussed subsequently. Note that the terms "alarm condition" and "fault condition" may be used interchangeably herein.

The escalation engine 130 performs alarm analytics on each type of alarm in the system. Alarm analytics will be discussed subsequently in greater detail, but in at least one example embodiment, alarm data for every BTS alarm in the system is analyzed for each BTS in the network. Escalation engine 130 may use the alarm analytics and escalation-type category to which an alarm under consideration has been assigned to decide whether to escalate the alarm under consideration. Escalation engine 130 may then escalate the alarm, raise an Escalation alarm, initiate a recovery action, or the like.

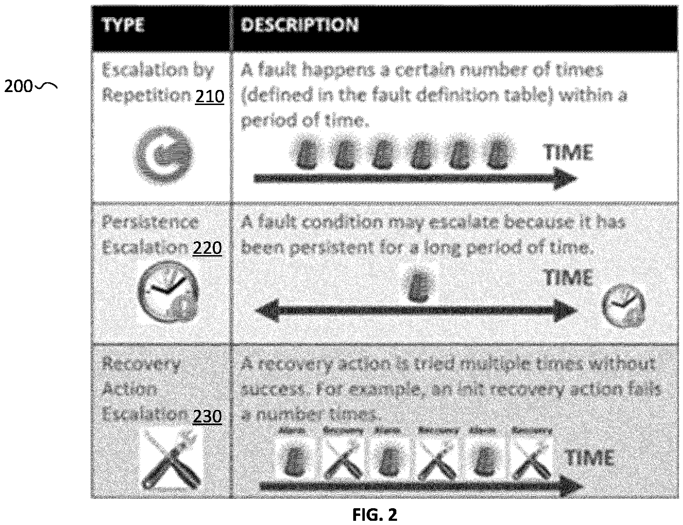

Referring next to FIG. 2 table 200, which illustrates three escalation-type categories, will be discussed in accordance with some example embodiments of the present disclosure. In at least one example embodiment, an escalation engine 130 uses any of three types of escalation-type categories to make a decision regarding whether a particular alarm is to be escalated: repetition escalation 210, which indicates that fault escalation may occur based on how often a fault repeats; persistence escalation 220, which indicates that fault escalation may occur based on a length of time a particular instance of a fault persists; and recovery action escalation 230, which indicates that fault escalation may occur based on how many times a fault recurs after a recovery action is initiated based on that fault.

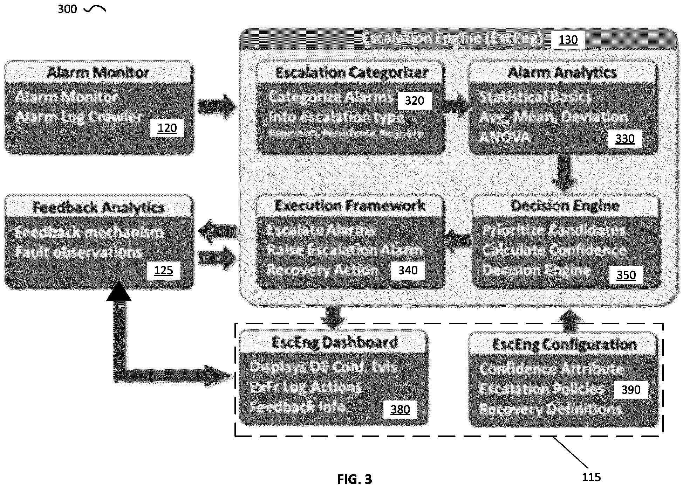

Referring next to FIG. 3, a block diagram illustrating functional blocks/modules 300 associated with an escalation engine 130 will be discussed in accordance with example embodiments of the present disclosure. Escalation engine 130 includes an escalation categorizer 320, an alarm analytics module 330, a decision engine 350 and an execution framework 340. Other functional blocks/modules associated with escalation engine 130 include alarm monitoring module 120, feedback analytics module 125, and operator display/configuration input module 115, which includes escalation engine dashboard 380 and escalation engine configuration module 390.

Alarm monitoring module 120 may receive network alarms from base stations and/or other network nodes, and notify escalation engine 130. Alarm monitoring module 120 may notify escalation engine 130 that information about one or more alarms has been received by transmitting the alarm itself, or transmitting an alarm or an alarm notification message. The information about the alarm(s) may be transmitted to escalation engine 130 in dedicated alarm messages, in an available field of an already existing network configuration message, or the like. Additionally, an alarm message may include information related to one or more alarms associated with subsystems and/or devices co-located with a BTS or other node transmitting the alarm message. In various examples, any message that includes alarm information may be referred to as an alarm message.

In some example embodiments, the alarm monitoring module 120 may crawl alarm logs generated by base stations, base station subsystems, or other network devices to identify network alarms. In some example embodiments, alarm monitoring module 120 may poll base stations and/or other network nodes or devices to determine if any alarms have been issued since a previous poll. Various techniques for monitoring a network for the existence of alarms are known to those of ordinary skill in the art, and any suitable alarm monitoring technique may be used.

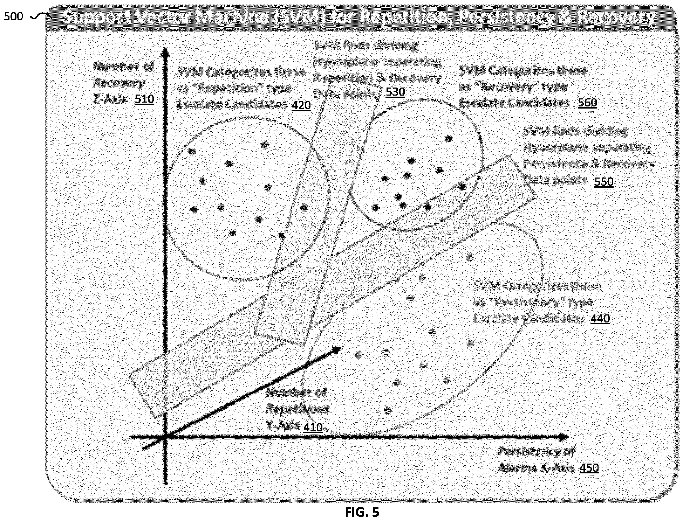

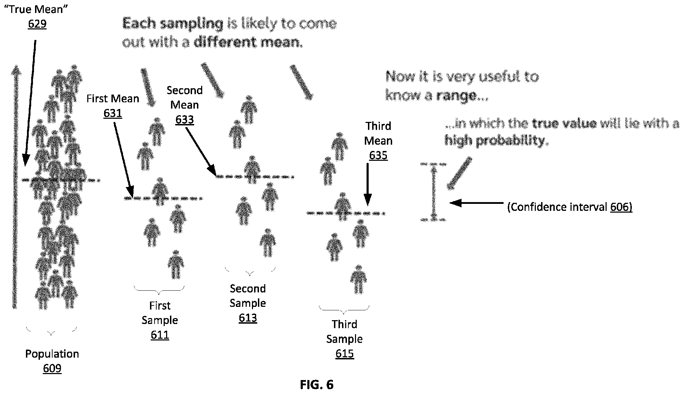

In response to receiving an alarm notification and/or message indicating the occurrence of an alarm condition associated with a network device, the escalation categorizer 320, assigns the alarm condition to one of the three escalation-type categorizes: repetition escalation 210; persistence escalation 220; or recovery action escalation 230 based on based on Support Vector Machine (SVM) learning analysis of alarm characteristics of the alarm conditions. As used herein, the phrase "assigning an alarm to an escalation-type category" is used interchangeably with the phrase "assigning an alarm condition to an escalation-type category." Operation of escalation categorizer 320, and in particular the SVM learning analysis, will be discussed in greater detail subsequently with reference to FIGS. 5 and 6.

An alarm analytics module 330 performs a statistical analysis to identify meaningful patterns in network alarm data. In at least one example embodiment, the network is a RAN with a large number of BTS, and the network alarm data may include historical alarm data, such as data included in network alarm logs received from the alarm monitoring module 120, fault observations, system generated feedback, and/or human feedback obtained from the feedback analytics module 125. System generated feedback may include, but is not limited to, results of automated fault recovery processes. Human feedback may include, but is not limited to, user/technician feedback including manually entered maintenance codes identifying faults identified by users/technicians, manually resolved alarm conditions, serial numbers, lot numbers, manufacturing information, technician identifiers, software/hardware version information, and/or other information useful in performing a meaningful statistical analysis of network faults on a per-device and/or system-wide basis. In at least one example embodiment, the alarm analytics module 330 determines system-wide averages, means, deviations, and Analysis of Variance (ANOVA) for each escalation-type category.

In some example embodiments, the statistical analysis performed by alarm analytics module 330 is performed on a per-alarm type basis for both individual BTS alarms and for all of the BTSs in the network, and includes an average time of persistence is determined for every alarm in the network, and for every BTS system and/or other network node or device. To achieve this, the persistence time of fault conditions is maintained by network manager 110. This is the amount of time that an alarm condition has remained active. For every alarm condition the average time of persistence can be calculated. In at least one example embodiment, for any given alarm condition the average persistence time may be the total persistence time divided by the number of instances.

In some example embodiments, the statistical analysis performed by alarm analytics module 330 includes calculating a standard deviation of the persistence, which may be calculated by finding the departure from the mean (average). This is calculated by squaring the difference between the persistence time and the average persistence value. The squares of the differences for each alarm are summed, and divided by the number of instances to compute the standard deviation.

In some example embodiments, the statistical analysis performed by alarm analytics module 330 includes calculating an average number of repetitions for each alarm in the network and for each BTS system. Network manager 110 stores the number of repetitions of every alarm condition. The number of repetitions refers to the number of times that any specific alarm condition has been raised. For each alarm condition, the average number of times can be calculated. For any given alarm condition this would be the number of times observed across the network divided by the number of base stations and/or network nodes.

In some example embodiments, the statistical analysis performed by alarm analytics module 330 includes calculating a standard deviation of the repetitions. For each alarm in the network, and for each BTS system, the number of repetitions of every alarm condition is kept by network manager 110. For each alarm condition the standard deviation from the average is calculated by squaring the difference between the repetitions and the average value. All of those are summed and divided by the number of BTSs to compute the standard deviation.

In some example embodiments, the statistical analysis performed by alarm analytics module 330 includes calculating an average number of recovery procedures performed for each alarm in the network, and for each BTS system, the number of recovery attempts of every alarm condition is kept by network manager 110. The number of recovery procedures refers to the number of times that the system tries to recover from any specific alarm condition. For every alarm condition, the average number of times recovery is attempted may be calculated. For any given alarm condition this would be the number of recovery attempts observed across the network divided by the number of BTS.

Example embodiments also include calculating a standard deviation of the number of recovery procedures performed for every alarm in the network, and for every BTS system. The number of recovery attempts of every alarm condition is kept by network manager 110. For every alarm condition, the standard deviation from the average may be calculated by squaring the difference between the recovery attempts and the average value. Those are summed and divided by the number of BTS to compute the standard deviation.

The alarm analytics module 330 may also perform an Analysis of Variance (ANOVA), in which the means of two or more independent groups are compared to determine whether there is statistical evidence that the associated population means are significantly different. Thus, an ANOVA calculation may be used to determine if the three different kinds of alarm escalation groupings, e.g. persistence, escalation, and recovery, are statistically different. In some example embodiments, the alarm analytics module 330 performs an ANOVA to determine if there are multiple escalation causes for an alarm condition. If an alarm condition has some combination of potential causes, for example some combination of repetition, persistence, and recovery, an ANOVA may indicate this.

For example, suppose a situation arises in which a BTS in the system is experiencing an alarm condition that has been raised multiple times (repetition), simultaneously it has persisted for a long time each time it occurs (persistence), and furthermore it resists recovery attempts (recovery). The alarm analytics module 330 may perform an ANOVA to help determine whether a combination of these factors is causing the alarm condition, and/or identify which of multiple underlying issues has a stronger influence on the alarm condition.

For each base station, and for each alarm condition that base station can produce, a repetition count for that alarm condition may be tracked by, for example, alarm monitoring module 120 or another subsystem/module included in network manager 110, the persistence time is recorded and the number of recovery attempts is logged.

In the following discussion, a *Null Hypothesis* $H_0$ is that the mean values are all the same which indicates that the alarm condition does not have a single source. In an *Alternative Hypothesis* $H_1$, differing mean values imply that one escalation cause (repetition, persistence, recovery) is statistically meaningful over the others. The symbol $k$ denotes the number of groups, in this case 3 because there are three kinds of escalation groups. The symbol $n$ denotes the sample size of the number of alarm observations collected.

In at least one example embodiment, ANOVA is computed from the following:

$$\text{SSR} = \text{the regression sum of squares} = \sum_{i=1}^{k} n_i (\bar{y}_i - \bar{y}_{cd})^2$$

where $\bar{y}_i$ is the mean of the sample from the $i^{th}$ population. $\bar{y}_{cd}$ is the mean of the combined data, or the overall mean.

$$\text{SSE} = \text{the error sum of squares} = \sum_{i,j} (y_{ij} - \bar{y}_i)^2$$

where $y_{ij}$ is the $j^{th}$ observation of the $i^{th}$ population. $\bar{y}_i$ is the mean of the sample from the $i^{th}$ population.

$$\text{SST} = \text{the total sum of squares (SST = SSR + SSE)} = \sum_{i,j} (y_{ij} - \bar{y}_{cd})^2$$

$df_r$ = the regression model degrees of freedom. $df_r = k - 1$

$df_e$ = the error degrees of freedom. $df_e = n - k$

$k$ = the total number of groups (levels of the independent variable)

$n$ = the total number of valid observations

$df_T$ = the total degrees of freedom. $df_T = df_r + df_e = n - 1$

$$MSR = \frac{SSR}{df_r} = \text{the regression mean square}$$

$$MSE = \frac{SSE}{df_e} = \text{the mean square error}$$

Then the F statistic itself is computed as $F = \frac{MSR}{MSE}$

Under the null hypothesis, both quantities estimate the variance of the random error, and thus the ratio is expected to be close to 1, and multiple escalation indicators are indicated. In this case, the escalation engine 130 would consider more than one escalation type (repetition, persistence, recovery). A large ratio is evidence against the null, and hence, the null hypothesis would be rejected. Where the null hypothesis is rejected, a single escalation indicators (repetition, persistence, recovery) is used. The escalation indicator that is the most serious would be escalated.

In some example embodiments, a decision engine 350 uses the statical outputs calculated by the alarm analytics module 330 to determine whether an alarm condition associated with the alarm falls within a confidence interval, thereby allowing the decision engine 350 to make a statistically meaningful escalation decision. For example, assume that an alarm, e.g. an alarm being tested has an alarm type of Alarm #65 (which may designate a loss of communication alarm, for example). Further assume that the alarm being tested has been assigned to the persistence escalation-type category by escalation categorizer 320. Further assume that the alarm analytics module 330 has determined that the system-wide mean time of persistence for alarms designated as Alarm #65 is 90 seconds with a standard deviation of 15%. Finally, assume that the alarm being tested persisted for 120 seconds. The decision engine 350 obtains a confidence level associated with persistence of alarms designated as Alarm #65, and uses that confidence level to calculate a confidence interval associated with the mean time of persistence for alarms designated as Alarm #65. If the persistence time of the alarm being tested falls outside of the calculated confidence interval, decision engine 350 may trigger an escalation action of the alarm being tested. Determination of a confidence interval will be discussed subsequently with reference to FIG. 6.

Triggering the escalation action of the alarm may include transmitting escalation information to execution framework 340. The escalation information may include information instructing the execution framework 340 to take a particular action, or may simply include information identifying the alarm being tested, and indicate that the alarm being tested is to be escalated.

If the decision engine 350 determines that the alarm being tested is not to be escalated, decision engine 350 may not transmit escalation information to execution framework 340, or may transmit to execution framework 340 escalation information indicating that a "do not escalate" decision has been reached.

Execution framework 340 receives escalation information from decision engine 350. In response to receiving the escalation information, execution framework 340 acts on alarms that have been identified to be escalated. In some example embodiments, the execution framework may perform one of three actions: escalate an alarm condition, raise an Escalation alarm, or provide a recovery action.

Escalating an alarm condition includes raising an alarm of the same condition, but of a higher criticality. For example, if the original alarm was a minor alarm the execution framework 340 may raise it to a major alarm, or raise a major alarm to a critical alarm. This simple form of escalation can raise attention to the operator that an alarm condition is a more severe condition than was originally raised, and may demand attention or troubleshooting.

Raising an Escalation alarm includes generating a dedicated alarm referred to as an Escalation alarm. A dedicated Escalation alarm indicates to the network manager 110 and/or an operator that the escalation engine 130 has identified a situation that warrants further investigation. An operator may obtain further details regarding the Escalation alarm from the escalation engine Dashboard 380.

Performing a recovery action may include taking actions such as resetting a unit. Certain alarm conditions may have pre-defined recovery operations or policies associated with them, as indicated by recovery definitions provided via escalation engine configuration module 390. When an alarm condition is escalated and warrants a recovery action, the system may automatically initiate a recovery action. Alarm condition determined by the escalation engine 130 to be serious enough to be escalated may have recovery actions or policies defined for them.

In some example embodiments, operator display/configuration input module 115 which may include a graphical user interface (GUI) along with a processor implementing the underlying GUI functionality. The GUI may display an escalation engine dashboard 380, which may be used for presenting information to, and receiving feedback from, technicians and/or other users. The escalation engine dashboard 380 may display actions that have been taken by the escalation engine 130, and allows an operator troubleshooting a problem to gain better insight into that problem. In at least one example embodiment, the escalation engine dashboard 380 may be used to display current confidence level values that have been set for use by the decision engine 350. Additionally, escalation engine dashboard 380 may be used to display action log records indicating actions that have been taken by the escalation engine 130. The action logs provide a history that may be useful for a technician during troubleshooting or maintenance planning. From the logs, a technician can see if an alarm has been escalated, an Escalation alarm has been raised, and if escalation recovery actions have been taken. The escalation engine dashboard 380 may also be used to collect and present feedback from technicians. The feedback collected from a technician may be presented to other technicians via the escalation engine dashboard 380, deliver to other operators to aid in setting confidence levels, provided to escalation engine 130 as alarm recovery information used in deciding whether to assign an alarm to the recovery action escalation type category, and to aid in determining a number of recovery actions attempted.

The operator display/configuration input module 115 may also include an escalation engine configuration module 390. In some example embodiments, escalation engine configuration module 390 allows display and manual configuration and/or reconfiguration of confidence levels and/or other confidence attributes, for example attributes identifying alarms and devices to which a particular confidence level pertains. In addition, an operator may change a confidence level associated with a particular device, device type, alarm, alarm type, location, time, or some combination including one or more of these.

The escalation engine configuration module 390 may also display escalation policies and accept operator input setting, defining and/or modifying, the escalation policies. For example, an escalation policy may specify that if an alarm associated with a first device type has already been escalated twice for the same reason within a 2-week period, *e.g.,* repetition, the third escalation of that alarm will automatically result in generation of an Escalation alarm indicating that the device should be removed from service. Alternatively, an escalation policy may specify that the fourth occurrence of that same alarm for any reason, *e.g.* repetition, persistence, or recovery, will automatically result in generation of an Escalation alarm indicating that the device should be removed from service. In example embodiments, an escalation policy may be a systemwide policy, a location-specific policy, a device-specific policy, an alarm-condition-specific policy, a policy specifying a degree of failure policy (extent to which an alarm is outside of the confidence interval), or the like.

The escalation engine configuration module 390 may also display, and accept user input defining or modifying, recovery definitions. Recover definitions can include requirements that must be met before an alarm can be said to be fully recovered. For example, a recovery interval of an alarm may be set so that once an alarm condition is clear for at least 24 hours, the alarm may be considered resolved, or recovered. Recovery definitions may also include information specifying actions to be taken by the execution framework 340 in response to an instruction by decision engine 350 to initiate a recovery action. For example, an automated recovery action may include a recovery definition that requires backing up a current state of a failing device, powering off the device, waiting for a given period of time, and then applying power to that device again after the given period of time has elapsed.

In response to receiving user input specifying a confidence attribute, an escalation policy, or a recovery definition, escalation engine configuration module 390 may provide that information to escalation engine 130, which updates the decision engine to include the appropriate values.

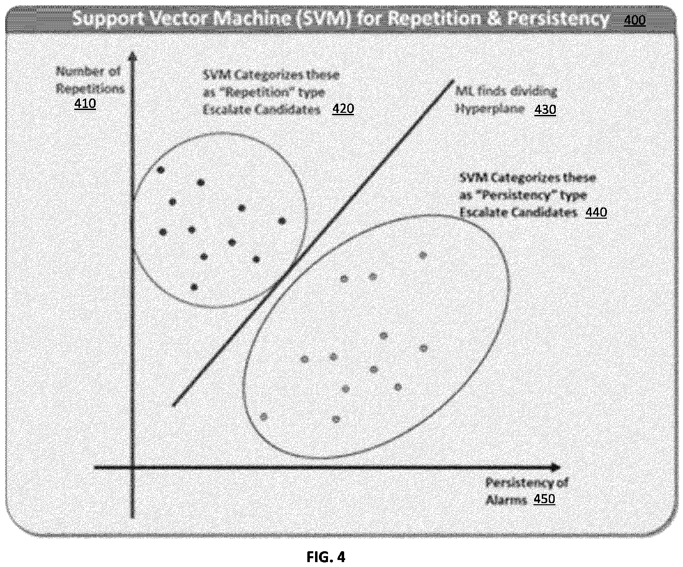

Referring next to FIG. 4, a graph 400 illustrating the use of Support Vector Machine learning to choose between two escalation-type categories will be discussed in accordance with example embodiments of the present disclosure. In at least one example embodiment, the escalation categorizer 320 has the responsibility to characterize alarms in the system based on one of the following three groupings: repetition, persistence, and recovery.

As previously noted, repetition refers to the case in which a particular alarm is occurring frequently in the system. Repetition may refer to either a single device or system, such as a single BTS, or the same alarm (e.g. alarm type) occurring at many BTSs in the network. Persistence refers to an alarm condition that lasts for a relatively long time either in one system or in the network (many BTSs). Recovery refers to a fault condition that resists recovery attempts either in one system or in the network (many BTSs) the condition is assigned to be a recovery escalation candidate.

A Support Vector Machine (SVM) is a machine learning method used in various example embodiments to classify incoming alarm events. Training sets can be used to train the Support Vector Machine to predict whether a new data point should fall into one of the three categories. An SVM according to some example embodiments is trained using historical network data. In some example embodiments, the historical network data may be marked and classified for supervised training. However, in other example embodiments an SVM may be trained in an unsupervised manner using the historical network data.

In general, Support Vector Machines look at groupings of data and find a dividing hyperplane between the groups of data. Here, in addition to the count of the number of times an alarm event is experienced, the persistence time and recovery operations happen, the SVM will categorize the alarm condition into its most likely category. To consider recovery, persistence and recovery will form a three-dimensional multi-vector space to classify alarm events. The data points are plotted in that space and the SVM will find an appropriate dividing hyperplane to classify new data points.

To illustrate the point, graph 400 shows a 2-dimensional SVM to categorize alarms into either repetition or persistence escalation candidates. The network manager 110 keeps track of a repetition count and persistency time, and the SVM "tags" an alarm condition as either a repetition type candidate or persistency type candidate based on their values and what side of the dividing hyperplane, also referred to herein as repetition-persistence hyperplane 430, the data point falls.

For example, the Y axis of graph 400 is used to plot a number of repetitions 410. For example, an alarm that recurs 4 times before being resolved would be plotted higher on the y axis than an alarm that recurs only 3 times. In the illustrated example embodiment, no distinction is made between an alarm that resolves without outside intervention and one that resolves only in response to outside intervention. Similarly the X axis of graph 400 is used to plot the persistency of an alarm 450, or the length of time an alarm remains active (either for a particular device or within the network as a whole). An alarm that remains active for 5 minutes will be plotted to the right of an alarm that remains active for only 2 minutes. An alarm may have alarm characteristics including both a persistence time and a number of repetitions. A data point for an alarm that is more persistent than it is repetitive will be classified as a persistency type escalation candidate 440, but a datapoint that is more repetitive than it is persistent will be classified as a repetition escalation type 420.

Referring next to FIG. 5, a graph 500 illustrating using Support Vector Machine learning to choose among three escalation-type categories when categorizing an alarm will be discussed in accordance with example embodiments of the present disclosure. In an example embodiment, escalation categorizer 320 uses a third dimension to categorize alarms as either recovery, repetition or persistence escalation candidates using a repetition-recovery hyperplane 530, a persistence-recovery hyperplane 550, and a repetition-persistence hyperplane 430 (not illustrated).

In some example embodiments, the network manager 110 tracks counts of recovery, repetitions, and persistency for any particular alarm condition. This forms a 3-dimensional "body" of data points. For example, alarm condition #52 might have experienced 2 long persistent bouts, 6 repetitions, and 3 recovery attempts. This would translate into a data point of X=2, Y=6, Z=3, where the X Axis represents an alarm's persistence, the Y Axis represents an alarm's repetitiveness, and the Z axis 510 represents an alarm's resistance to recovery, as represented by a number of recovery attempts associated with an alarm.

In the illustrated example embodiment, the hyperplane dividing the recovery type of escalation candidates 560 and the persistency type escalation candidates 440 is shown as the persistence-recovery hyperplane 550. The hyperplane dividing the repetition escalation type candidates 420 and the recovery type of escalation candidates 560 is shown as repetition-recovery hyperplane 530. The hyperplane dividing the persistency type escalation candidates 440 and the repetition escalation type candidates 420 is illustrated in FIG. 4. As used herein, the terms persistency candidate, repetition candidate, and recovery candidates refer to alarms and/or alarm conditions that have been assigned to one of the escalation-type categories (persistency, repetition, recovery) by escalation categorizer 320. The term "candidates" refers to the fact that the alarm is a "candidate" for escalation.

Referring next to FIG. 6, a diagram illustrating determining a confidence interval will be discussed in accordance with example embodiments of the present disclosure. The general concept of a confidence interval used by the decision engine 350 in at least some example embodiments can be illustrated by considering a task in which an attempt is made to determine the average (loosely referred to herein as the "mean") height 629 of adults in New York City, which as of 2024 has a population 609 of approximately 7,613,466. It is impractical to measure the height of every individual in the entire population to find the "true" mean. It is much more practical to take a limited number of samples, and determine the mean (or average) of each sample. Thus, a first sample 611 having a first mean 631, a second sample having a second mean 633, and a third sample having a third mean 635 may all be taken. All of the means (or loosely the averages) may be different, and no one sample is likely to represent the true mean 629. However, the confidence interval 606 is a range of values which is highly likely to include the true mean 629 of the entire population 609.

The actual determination of the confidence interval 606 in accordance with embodiments of the present disclosure follows. As already discussed, for each escalation-type category (Repetition, Persistent, Recovery) and for each Escalation alarm candidate, the decision engine 350 determines whether to escalate that alarm.

Decision engine 350 receives the outputs of alarm analytics module 330, which includes means ($\mu$ or $x$) and standard deviations ($\sigma$ or $s$) computed using $n$ samples from a real network. These measured samples reflect the means ($\mu$) and standard deviations ($\sigma$) of a theoretic "real" population. For example, suppose there are three BTS, and each BTS may report one hundred different alarms. Considering a single alarm, for example Alarm #20, $n$ potentially different sample outcomes for Alarm #20 in this small 3 BTS network may be observed. From those $n$ samples, means ($x$) and standard deviations ($s$) for Alarm #20 may be calculated by alarm analytics module 330. However, these samples are just observed instances which may not reflect the theoretic "true nature" of Alarm #20 if it were a much larger network, in the same way that the three samples of New Yorker's heights may not reflect the true average height of the total population of adult New Yorker's. The behavior of the network, over say a billion BTSs (the theoretic population) would be more reliable and would have an "actual" value.

Thus, the outputs of alarm analytics module 330, which is based on the 3 BTS network, is just an "estimate" of that theoretical population. In general, escalation engine 130 makes decisions based on its observations. However, a statistically meaningful estimate of the "actual value" can be calculated with a confidence interval, which gives a range of values (lower and upper bound) for the "actual" value of the theoretic population with a chosen certainty level. The chosen certainty level is referred to herein as a confidence level, and can be input into the decision engine 350 via escalation engine configuration module 390.

The equation for Confidence Interval calculations is:

$$CI = \bar{x} \pm z \cdot s/\sqrt{n}$$

where $CI$ is the confidence interval, $\bar{x}$ is the mean (or average), $z$ is a value determined from a Z-Value table based on a provided/selected confidence level, $s$ is the standard deviation, and $n$ is the sample size.

Typical confidence levels used in some example embodiments may be between 95% to 99%, but different confidence levels may be used without departing from the spirit and scope of the present disclosure. The confidence level $z$ has fixed values based on the confidence level. For example, a 95% confidence level has a z=1.96.

In various example embodiments, for repetition alarms, for each base station and for every alarm, if the repetition of the alarm exceeds one standard deviation, the escalation engine will escalate the alarm. As previously explained, a mean or average of an observed value is merely an "estimate" of the "true value" of a network running, for example, a billion BTSs. The Confidence Interval calculation is used in various example embodiments to find an estimated range of values of this "true value" with a certain confidence level.

For example, suppose in a 5,000 BTS network each BTS has 100 alarms it could potentially raise. The escalation engine 130 may observe 20 samples for instances of alarm #20 across all these BTSs and calculate a mean and standard deviation based on these observations. Suppose the mean and standard deviation are 4 and 1 respectively. The CI calculation for 95% would be CI = 4 + 1.96 (1/$\sqrt{20}$) = 4 + 0.438 = (3.56 to 4.438) with a 95% confidence. Thus, in a network with a billion BTSs we can be 95% confident that a value meaningful for escalation for alarm #20 is between (3.56 to 4.438). So, if we observe 5 repetitions of alarm #20 in a BTS we can be quite certain this should be escalated.

For persistence of alarms, the confidence interval calculation may be used for spans of time instead of just counts. Alarm monitoring module 120, for example, may collect sample information from a network and provide that information to the escalation engine 130. The escalation engine may escalate the alarm if the period during which the alarm has been active is more than one standard deviation from the mean.

For recovery of alarms, a similar confidence interval calculation is done from observed samples as that with the repetition of alarms. If the number of recovery attempts exceeds the mean by one standard deviation for a particular alarm in a BTS, the escalation engine 130 may escalate that alarm.

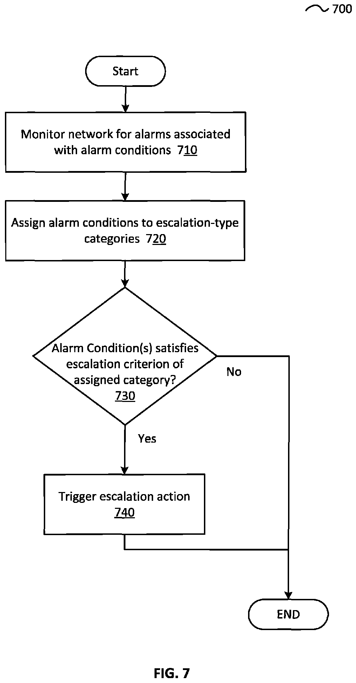

Referring next to FIG. 7 a method 700 of triggering an escalation action will be discussed in accordance with example embodiments of the present disclosure. As illustrated by block 710, a network, for example, network 100 (FIG. 1) is monitored for alarms associated with alarm conditions. As illustrated by block 720, the escalation engine 130 assigns each of the alarm conditions occurring identified by monitoring the network to an escalation-type category. In at least one example embodiment, the category assignment is performed using Support Vector Machine learning analysis of alarm characteristics of the alarm conditions, where the alarm characteristics include, for example, a number of times a particular alarm condition has occurred in a given time interval, a length of time the particular alarm condition has persisted, and a number of times error recovery has been attempted for the particular alarm condition without resolving the particular alarm condition.

As illustrated by block 730, the escalation engine 130 determines whether each particular alarm condition satisfies an escalation criterion of the escalation-type category to which the particular alarm condition has been assigned. The determination made at block 730 may include determining a network/system-wide observed mean or average characteristic of the escalation-type category into which the alarm has been placed, determining a confidence interval of the escalation-type category, and determining whether the alarm characteristics of a candidate alarm, *i.e.* the alarm being evaluated by block 730, fall outside the confidence interval.

If the decision made at block 730 indicates that a mean or average value of a characteristic of the candidate alarm is within the confidence interval (*i.e.* not outside the confidence interval), the candidate alarm does not satisfy the escalation criterion, and method 700 ends. If, however, the decision at block 730 indicates that the escalation criterion is satisfied, for example if that a mean or average value of a characteristic of the candidate alarm are outside the confidence interval, then an escalation action is triggered, as illustrated by block 740.

Triggering an escalation action may include transmitting the result of the escalation decision made at block 730 to execution framework 340, which implements the escalation action. Thus, triggering an escalation action can include triggering the escalation of an existing alarm, raising a dedicated Escalation alarm, initiating an automated recovery action, or the like.

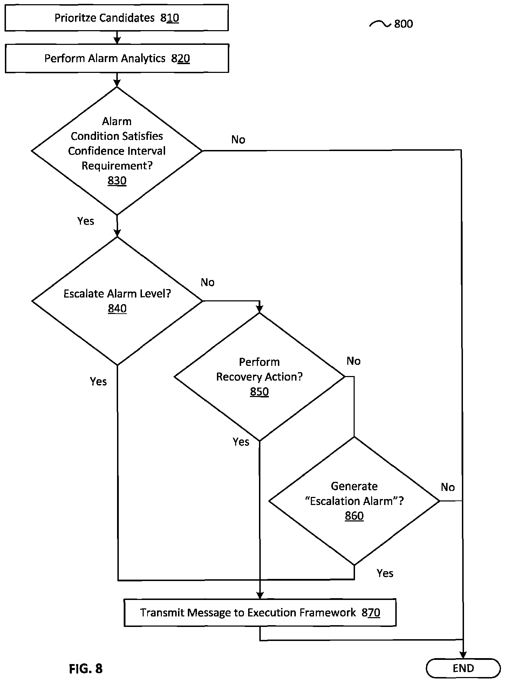

Referring next to FIG. 8, a method 800 performed by an escalation engine 130 will be discussed in accordance with example embodiments of the present disclosure. As illustrated by block 810, candidate alarms may be prioritized. Prioritizing candidate alarms may include queueing alarms to be processed in order of a current criticality associated with the alarm, or processing alarms in an order of importance indicated by escalation or other policies/rules.

As illustrated by block 820, alarm analytics module 330 performs a statistical analysis on the network alarms. The statistical analysis may include calculating observed averages, means, and deviations, and performing an Analysis of Variance (ANOVA).

As illustrated by block 830, a decision engine included in escalation engine 130 determines whether an alarm characteristic of a candidate alarm condition satisfies a confidence interval requirement for escalation. In at least one example embodiment, the confidence interval requirement for escalation is satisfied if the alarm characteristic of the candidate alarm falls inside a confidence interval associated with a particular type of alarm and a particular escalation-type category. If the candidate alarm condition does not have a characteristic that satisfies the confidence interval requirement, method 800 ends.

As illustrated by block 840, if the candidate alarm condition satisfies the confidence interval requirement, decision engine 350 decides whether to escalate the level of an existing alarm, for example by raising the priority of the existing alarm from low priority to medium priority. The decision regarding whether to escalate the level of an existing alarm may be based on escalation policies and/or recovery definitions obtained via escalation engine configuration module 390. As illustrated by block 870, if the decision engine 350 determines to initiate escalation of a criticality level of an existing alarm at block 840, a message indicating that decision is transmitted to execution framework 340. Otherwise, method 800 proceeds to block 850.

As illustrated by block 850, the decision engine 350 decides whether to initiate performance of a recovery action. The decision regarding whether to perform a recovery action may be based, at least in part, on escalation policies and/or recovery definitions obtained via escalation engine configuration module 390. As illustrated by block 870, if the decision engine 350 determines to initiate a recovery action at block 850, a message indicating that decision is transmitted to execution framework 340. Otherwise, method 800 proceeds to block 860.

As illustrated by block 860, the decision engine 350 decides whether to generate an Escalation alarm. The decision regarding whether to generate an Escalation alarm may be based, at least in part, on escalation policies and/or recovery definitions obtained via escalation engine configuration module 390. As illustrated by block 870, if the decision engine 350 determines to initiate generation of an escalation at block 860, a message indicating that decision is transmitted to execution framework 340. Otherwise, method 800 ends.

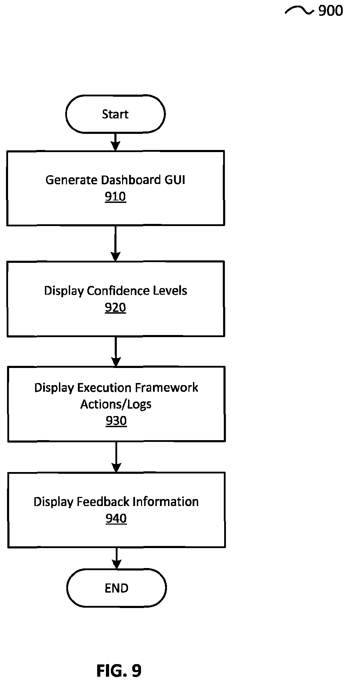

Referring next to FIG. 9, a method 900 performed by a processing device to generate a dashboard graphical user interface (GUI) for use with an escalation engine 130 will be discussed in accordance with example embodiments of the present disclosure. As illustrated by block 910, a dashboard GUI is generated, and transmitted for display on a display device. The dashboard GUI may be integrated with an escalation engine 130 and one or more modules/subsystems associated with the escalation engine 130, such as a feedback analytics module 125. Generation of a basic GUI is within the abilities of a person having ordinary skill in the art, although implementing an escalation engine dashboard 380 as disclosed herein would require specialized knowledge obtained from the present disclosure.

As illustrated by block 920, confidence levels being used by decision engine 350 to generate confidence intervals may be displayed on escalation engine dashboard 380. As illustrated by block 930, execution framework actions and logs may also be displayed. Each type of information may be displayed in a separate window or GUI display area, or various layouts integrating multiple types of information onto a single GUI display window may be used. As illustrated by block 940, feedback information may also be displayed in escalation engine dashboard 380. The feedback information may include fault observations, and/or other information obtained from feedback analytics module 125.

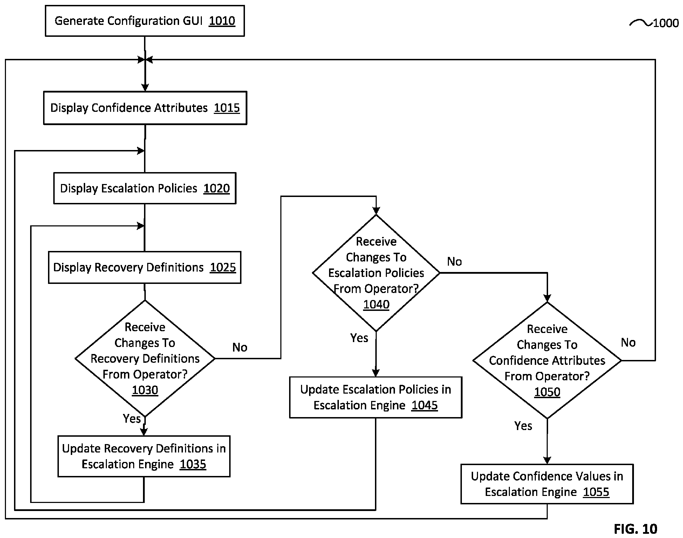

Referring next to FIG. 10, a method 1000 of obtaining and updating confidence attributes, escalation policies, and/or the recovery definitions for use with an escalation engine will be discussed in accordance with example embodiments of the present disclosure. As illustrated by block 1010, a configuration graphical user interface, is generated by operator display/configuration input module 115, which in some example embodiments includes escalation engine dashboard 380 and escalation engine configuration module 390.

As illustrated by block 1015, confidence attributes may be displayed on the configuration graphical user interface. In at least some example embodiments, confidence attributes include one or more confidence levels used by decision engine 350 to determine confidence intervals. In some example embodiments, confidence attributes may also include information linking the confidence attributes to particular alarms, alarm conditions, alarm types, devices, BTSs, geographic locations, times, and the like.

As illustrated by block 1020, escalation policies may be displayed on the configuration graphical user interface. In some example embodiments, escalation policies include, but are not limited to, thresholds and/or other information indicating when particular escalation actions are to be triggered and/or suppressed. For example, an escalation policy may suppress recovery actions for particular network devices during particular times of day. As another example, an escalation policy may indicate that the criticality of an existing alarm associated with a persistent loss of communication at one BTS is to be increased by two levels if a neighboring BTS is also experiencing a loss of communication. Note that the escalation policies are, in at least one example embodiment, used to govern escalation after a decision has been made to escalate an alarm condition by decision engine 350.

As illustrated by block 1025 recovery definitions may be displayed on the configuration graphical user interface. In some example embodiments, recovery definitions include information linking particular recovery actions and/or recovery parameters to particular alarm conditions and devices. For example, recovery of a BTS switch experiencing an over-temperature condition may use a different recovery procedure than recovering that same device from a communications error, or recovering a radio transmitter from an over-temperature condition. Recovery definitions may provide specific steps to be taken to implement a recovery action, indicate how to determine when a recovery action is considered complete, define post recovery testing to be performed before placing the unit back in service after the recovery action, or the like. In at least one example embodiment, the entire recovery action, from performing pre-requisite actions prior to recovering a device, actions performed to recover the device to clear the alarm condition, and post recovery actions to be performed prior to placing the unit back in service may be fully automated, and may be performed without contemporaneous human interaction and/or decision making.

As illustrated by block 1030, escalation engine configuration module 390 determines if changes to recovery definitions have been input to operator display/configuration input module 115. If changes to the recovery definitions have been received, the recovery definitions used by escalation engine 130 are updated, as illustrated by block 1035, and the new recovery definitions are displayed at block 1025.

If no changes to the recovery definitions have been input, the method proceeds to block 1040, where escalation engine configuration module 390 determines if changes to escalation policies have been input to operator display/configuration input module 115. If changes to the escalation policies have been received, the escalation policies used by escalation engine 130 are updated, as illustrated by block 1045, and the new recovery definitions are displayed at block 1020. If no changes to the recovery definitions have been input at block 1040, the method proceeds to block 1050.

As illustrated by block 1050, the escalation engine configuration module 390 determines if changes to confidence attributes have been input to operator display/configuration input module 115. If changes to the confidence attributes have been, the confidence attributes used by escalation engine 130 are updated, as illustrated by block 1055, and the new recovery definitions are displayed at block 1015. Otherwise, method 1000 returns to block 1015.

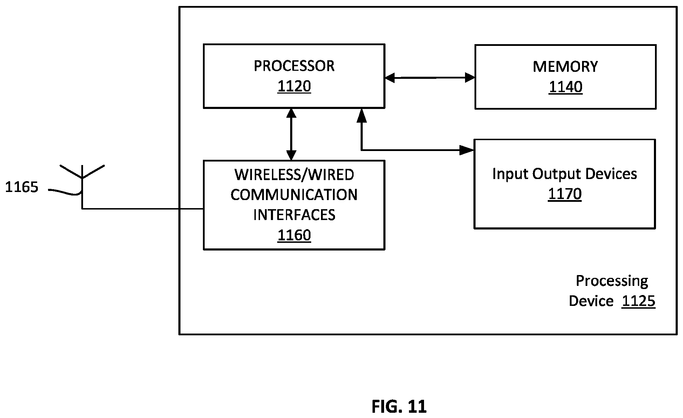

Referring next to FIG. 11, a processing device 1125 will be discussed in accordance with example embodiments of the present disclosure. Processing device 1125 may be used to implement any of the above example embodiments in which processing of data, signals, or other information is needed or desired. Such devices may include, but are not limited to, BTSs 144a-d and their subsystems, network manager 110 and its subsystems, escalation engine 130 and its associated subsystems and modules, user equipment 145 a-i, and so on.

As shown, the processing device 1125 includes: a memory 1140; a processor 1120 connected to the memory 1140; input output devices 1170 connected to the processor 1120, which can be used to display information and receive input; wireless/wired communication interfaces 1160 connected to the processor 1220; and one or more (*e.g.,* a plurality of) antennas or antenna panels 1265 connected to wireless/wired communication interfaces 1160. Some of the wireless/wired communication interfaces 1160 , in conjunction with and the antenna 1165, may constitute a transceiver for transmitting/receiving data from/to other network elements (*e.g.*, other user equipment (UE), BTSs such as g-node Bs (gNBs), location management functions (LMFs), radio transmitters (TRPs), *etc.*) via one or more antenna beams. Depending on the implementation of processing device 1125, the processing device 1125 may include many more components than those shown in FIG. 11. However, it is not necessary that all of these conventional components be shown in order to disclose the illustrative example embodiment(s).

The memory 1140 may be a computer readable storage medium that generally includes a random-access memory (RAM), read only memory (ROM), and/or a permanent/long-term mass storage device, such as a disk drive. The memory 1140 also stores an operating system and any other routines/modules/applications for providing the functionalities of processing device 1125 to be executed by the processor 1120. These software components may also be loaded from a separate computer readable storage medium into the memory 1140 using a drive mechanism (not shown). Such separate computer readable storage medium may include a disc, tape, DVD/CD-ROM drive, memory card, or other like computer readable storage medium (not shown). In some example embodiments, software components may be loaded into the memory 1140 via one of the wireless/wired communication interfaces 1160, rather than via a computer readable storage medium.

The processor 1120 may be configured to carry out instructions of a computer program by performing the arithmetical, logical, and input/output operations of the system. Instructions may be provided to the processor 1120 by the memory 1140.

The wireless/wired communication interfaces 1160 may include components that interface the processor 1120 with the antenna 1165, or other input/output components. As will be understood, the wireless/wired communication interfaces 1160 and programs stored in the memory 1140 may be used to set forth the special purpose functionalities of a particular device, which may vary depending on the implementation of the processing device 1125.

The input output devices may also include one or more user input devices (*e.g.,* a keyboard, a keypad, a mouse, a touch screen display, or the like) and user output devices (*e.g.*, a display, a speaker, or the like).

According to one or more example embodiments, at least one memory may include or store computer-executable instructions which, when executed by at least one processor, cause a device to perform one or more operations discussed herein.

Various non-limiting illustrative embodiments will be discussed here. Illustrative embodiment 1 is a processing system comprising a memory storing a program of instructions and and a processor coupled to the memory. The processor is configured to execute the program of instructions to monitor a network including a plurality of devices for alarms generated by the plurality of devices, the alarms being associated with alarm conditions, assign alarm conditions associated with received alarms to escalation-type categories based on Support Vector Machine learning analysis of alarm characteristics of the alarm conditions, determine whether a first alarm condition associated with a first received alarm satisfies a first escalation criterion associated with a first escalation-type category to which the first alarm condition has been assigned, and trigger an escalation action in response to determining that the first alarm condition satisfies the first escalation criterion.

Illustrative embodiment 2, includes the processing system of illustrative embodiment 1, wherein the processor is further configured to execute the program of instructions to determine a confidence interval associated with a first alarm characteristic, the first alarm characteristic associated with the first escalation-type category, and wherein the first escalation criterion is satisfied if a second alarm characteristic of the first received alarm is outside the confidence interval of the first alarm characteristic associated with the first escalation-type category.

Illustrative embodiment 3 includes the processing system of claim as in illustrative embodiment 1 or 2, wherein the alarm characteristics of the alarm conditions include a number of times a particular alarm condition has occurred in a given time interval, a persistence of the particular alarm condition, and a number of times error recovery has been attempted for the particular alarm condition without resolving the particular alarm condition.

Illustrative embodiment 4 includes the processing system as in any of illustrative embodiments 1-3, wherein the processor is further configured to execute the program of instructions to perform an Analysis of Variance across a plurality of escalation-type categories.

Illustrative embodiment 5 includes the processing system of illustrative embodiment 4, wherein the processor is further configured to execute the program of instructions to determine whether a first alarm condition associated with the first received alarm is attributable to a plurality of different underlying causes based on the Analysis of Variance.

Illustrative embodiment 6 includes the processing system as in illustrative embodiment 4 or 5, wherein the processor is further configured to execute the program of instructions to determine which factor of a plurality of factors more strongly influences occurrence of the first alarm condition based on the Analysis of Variance.

Illustrative embodiment 7 includes the processing system as in any of illustrative embodiments 1-6, wherein the processor is further configured to execute the program of instructions to store data associated with the received alarms, including information indicating escalation-type categories to which the received alarms have been assigned, devices associated with the received alarms, and alarm characteristics, and include the data associated with the received alarms to perform the Support Vector Machine learning analysis of alarm characteristics of future received alarms.

Illustrative embodiment 8 includes the processing system as in any of illustrative embodiments 1-7, wherein the processor is further configured to execute the program of instructions to obtain historical alarm data indicating occurrences of a plurality of historical alarm events, each of the plurality of historical alarm events associated with historical event parameters, and perform initial unsupervised training by assigning received alarms to escalation-type categories based on Support Vector Machine learning analysis of alarm characteristics of the historical alarm data.

Illustrative embodiment 9 includes the processing system as in any of illustrative embodiments 1-8, wherein the processor is further configured to execute the program of instructions to trigger the escalation action by transmitting a message to an escalation framework, and wherein the message instructs the escalation framework to increase a criticality level assigned to the first alarm condition, initiate a recovery action associated with the first received alarm, or issue an Escalation alarm.

Illustrative embodiment 10 includes the processing system as in illustrative embodiment 9, wherein the Escalation alarm indicates that an issue warranting further investigation by humans has been identified.

Illustrative embodiment 11 includes the processing system as in any of illustrative embodiments 1-10, wherein the processor is further configured to execute the program of instructions to display, to an operator, information related to one or more of the alarm conditions, escalation actions, or system feedback provided to the processing system.

Illustrative embodiment 12 includes the processing system as in any of illustrative embodiments 1-11, wherein the processor is further configured to execute the program of instructions to display information related to one or more confidence attributes, escalation policies, or recovery definitions, receive input related to any or all of the confidence attributes, the escalation policies, or the recovery definitions, and update the confidence attributes, the escalation policies, and the recovery definitions based on the input.

Illustrative embodiment 13 includes the processing system as in any of illustrative embodiments 1-12, wherein the escalation-type categories include repetition escalation, persistence escalation, and recovery escalation.

Illustrative embodiment 14 includes a communication network comprising: a plurality of network nodes; and the processing system as in any of illustrative embodiments 1-13.

Illustrative embodiment 15 includes a method, comprising: monitoring a network including a plurality of devices for alarm messages generated by the plurality of devices, the alarm messages being associated with alarm conditions; assigning alarm conditions associated with received alarm messages to escalation-type categories based on Support Vector Machine learning analysis of alarm characteristics of the alarm conditions; determining whether a first alarm condition associated with a first received alarm message satisfies a first escalation criterion associated with a first escalation-type category to which the first alarm condition has been assigned; and triggering an escalation action in response to determining that the first alarm condition satisfies the first escalation criterion.

Illustrative embodiment 16 includes the method as in illustrative embodiment 15, further comprising: determining a confidence interval associated with the first alarm condition assigned to the first escalation-type category, and wherein the first escalation criterion is satisfied if the confidence interval of the first alarm characteristic satisfies a confidence threshold associated with the first escalation-type category.

One or more functions associated with the methods and/or processes described herein can be implemented via a processing module that operates via the non-human "artificial" intelligence (AI) of a machine. Examples of such AI include machines that operate via anomaly detection techniques, decision trees, association rules, expert systems and other knowledge-based systems, computer vision models, artificial neural networks, convolutional neural networks, support vector machines (SVMs), Bayesian networks, genetic algorithms, feature learning, sparse dictionary learning, preference learning, deep learning and other machine learning techniques that are trained using training data via unsupervised, semi-supervised, supervised and/or reinforcement learning, and/or other AI. The human mind is not equipped to perform such AI techniques, not only due to the complexity of these techniques, but also due to the fact that artificial intelligence, by its very definition - requires "artificial" intelligence - i.e. machine/non-human intelligence.

One or more functions associated with the methods and/or processes described herein can be implemented as a large-scale system that is operable to receive, transmit and/or process data on a large-scale. As used herein, a large-scale refers to a large number of data, such as one or more kilobytes, megabytes, gigabytes, terabytes or more of data that are received, transmitted and/or processed. Such receiving, transmitting and/or processing of data cannot practically be performed by the human mind on a large-scale within a reasonable period of time, such as within a second, a millisecond, microsecond, a real-time basis, or other high speed required by the machines that generate the data, receive the data, convey the data, store the data and/or use the data.

One or more functions associated with the methods and/or processes described herein can require data to be manipulated in different ways within overlapping time spans. The human mind is not equipped to perform such different data manipulations independently, contemporaneously, in parallel, and/or on a coordinated basis within a reasonable period of time, such as within a second, a millisecond, microsecond, a real-time basis or other high speed required by the machines that generate the data, receive the data, convey the data, store the data and/or use the data.

One or more functions associated with the methods and/or processes described herein can be implemented in a system that is operable to electronically receive digital data via a wired or wireless communication network and/or to electronically transmit digital data via a wired or wireless communication network. Such receiving and transmitting cannot be practically performed by the human mind because the human mind is not equipped to electronically transmit or receive digital data, let alone to transmit and receive digital data via a wired or wireless communication network.

One or more functions associated with the methods and/or processes described herein may operate to cause an action by a processing module directly in response to a triggering event -- without any intervening human interaction between the triggering event and the action. Any such actions may be identified as being performed "automatically", "automatically based on" and/or "automatically in response to" such a triggering event. Furthermore, any such actions identified in such a fashion specifically preclude the operation of human activity with respect to these actions - even if the triggering event itself may be causally connected to a human activity of some kind.

One or more functions associated with the methods and/or processes described herein can be implemented in a system that is operable to electronically store digital data in a memory device. Such storage cannot be practically performed by the human mind because the human mind is not equipped to electronically store digital data.

As discussed herein, the terminology "one or more" and "at least one" may be used interchangeably.

The term, "UE" is an acronym for user equipment, and is used in both the singular and plural sense. UE can include, and may also be referred to herein, as a mobile station, and may include a mobile phone, a cell phone, a smartphone, a handset, a personal digital assistant (PDA), a tablet, a laptop computer, a phablet, a vehicle including a vehicular communication system, an Internet-of-Things (IoT) device, a robot, or the like.

As discussed herein, transmission resources may also be referred to as radio or cellular resources for transmitting, and may include, for example, time and/or frequency resources for transmitting information and/or data between devices.

Although the terms first, second, etc. may be used herein to describe some elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (*e.g.*, "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the preceding description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures, and techniques may be shown without unnecessary detail in order to avoid obscuring example embodiments.

As discussed herein, illustrative embodiments have been described with reference to acts and symbolic representations of operations (*e.g.*, in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing user equipment or other network elements and/or hardware. Such existing hardware may be processing or control circuitry such as, but not limited to, one or more processors, one or more Central Processing Units (CPUs), one or more controllers, one or more arithmetic logic units

**EP 4 672 690 A1**

(ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently, or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and some other mediums capable of storing, containing, or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory, and example algorithms, encoded as computer program code, serve as means for providing or causing performance of operations discussed herein.

The hardware used to implement various example embodiments may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (*i.e.*, open language). The term "coupled," as used herein, is defined as connected, although not necessarily directly, and not necessarily mechanically. Terminology derived from the word "indicating" (*e.g.*, "indicates" and "indication") is intended to encompass all suitable techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

**Claims**

1. An apparatus (1125) comprising:

    means for monitoring (710) a network including a plurality of devices for alarms generated by the plurality of devices, the alarms being associated with alarm conditions,
    means for assigning (720) alarm conditions associated with received alarms to escalation-type categories based

17

on Support Vector Machine learning analysis of alarm characteristics of the alarm conditions,

means for determining (730) whether a first alarm condition associated with a first received alarm satisfies a first escalation criterion associated with a first escalation-type category to which the first alarm condition has been assigned, and

means for triggering (740) an escalation action in response to determining that the first alarm condition satisfies the first escalation criterion.

**2.** The apparatus (1125) of claim 1, further comprising:

means for determining a confidence interval associated with a first alarm characteristic, the first alarm characteristic associated with the first escalation-type category, and wherein

the first escalation criterion is satisfied if a second alarm characteristic of the first received alarm is outside the confidence interval of the first alarm characteristic associated with the first escalation-type category.

**3.** The apparatus (1125) of claim 1, wherein

the alarm characteristics of the alarm conditions include a number of times a particular alarm condition has occurred in a given time interval, a persistence of the particular alarm condition, and a number of times error recovery has been attempted for the particular alarm condition without resolving the particular alarm condition.

**4.** The apparatus (1125) of claim 1, further comprising:

means for performing an Analysis of Variance across a plurality of escalation-type categories.

**5.** The apparatus (1125) of claim 4, further comprising:

means for determining whether a first alarm condition associated with the first received alarm is attributable to a plurality of different underlying causes based on the Analysis of Variance.

**6.** The apparatus (1125) of claim 4, further comprising:

means for determining which factor of a plurality of factors more strongly influences occurrence of the first alarm condition based on the Analysis of Variance.

**7.** The apparatus (1125) of claim 1, further comprising:

means for storing data associated with the received alarms, including information indicating escalation-type categories to which the received alarms have been assigned, devices associated with the received alarms, and alarm characteristics, and

means for including the data associated with the received alarms to perform the Support Vector Machine learning analysis of alarm characteristics of future received alarms.

**8.** The apparatus (1125) of claim 1, further comprising:

means for obtaining historical alarm data indicating occurrences of a plurality of historical alarm events, each of the plurality of historical alarm events associated with historical event parameters, and

means for performing initial unsupervised training by assigning received alarms to escalation-type categories based on Support Vector Machine learning analysis of alarm characteristics of the historical alarm data.

**9.** The apparatus (1125) of claim 1, further comprising:

means for triggering the escalation action by transmitting a message to an escalation framework, and wherein the message instructs the escalation framework to increase a criticality level assigned to the first alarm condition, initiate a recovery action associated with the first received alarm, or issue an Escalation alarm.

**10.** The apparatus (1125) of claim 9, wherein

the Escalation alarm indicates that an issue warranting further investigation by humans has been identified.

**11.** The apparatus (1125) of claim 1, further comprising:

means for displaying, to an operator, information related to one or more of the alarm conditions, escalation actions, or system feedback provided to the processing system.

**12.** The apparatus (1125) of claim 1, further comprising:

means for displaying information related to one or more confidence attributes, escalation policies, or recovery definitions,
means for receiving input related to any or all of the confidence attributes, the escalation policies, or the recovery definitions, and
means for updating the confidence attributes, the escalation policies, and the recovery definitions based on the input.

**13.** The apparatus (1125) of claim 12, wherein the escalation-type categories include

repetition escalation,
persistence escalation, and
recovery escalation.

**14.** A method (700), comprising:

monitoring (710) a network including a plurality of devices for alarm messages generated by the plurality of devices, the alarm messages being associated with alarm conditions;
assigning (720) alarm conditions associated with received alarm messages to escalation-type categories based on Support Vector Machine learning analysis of alarm characteristics of the alarm conditions;
determining (730) whether a first alarm condition associated with a first received alarm message satisfies a first escalation criterion associated with a first escalation-type category to which the first alarm condition has been assigned; and
triggering (740) an escalation action in response to determining that the first alarm condition satisfies the first escalation criterion.

**15.** The method (700) of claim 14, further comprising:

determining a confidence interval associated with the first alarm condition assigned to the first escalation-type category, and
wherein the first escalation criterion is satisfied if the confidence interval of the first alarm characteristic satisfies a confidence threshold associated with the first escalation-type category.

FIG. 1

200⌒

| TYPE | DESCRIPTION |
|---|---|
| Escalation by Repetition 210 | A fault happens a certain number of times (defined in the fault definition table) within a period of time. TIME |
| Persistence Escalation 220 | A fault condition may escalate because it has been persistent for a long period of time. TIME |
| Recovery Action Escalation 230 | A recovery action is tried multiple times without success. For example, an init recovery action fails a number times. TIME |

**FIG. 2**

300 ⌒

**Escalation Engine (EscEng)** 130

**Alarm Monitor**

Alarm Monitor
Alarm Log Crawler 120

**Escalation Categorizer**

Categorize Alarms 320
Into escalation type
Repetition, Persistence, Recovery

**Alarm Analytics**

Statistical Basics
Avg, Mean, Deviation
ANOVA 330

**Feedback Analytics**

Feedback mechanism
Fault observations 125

**Execution Framework**

Escalate Alarms
Raise Escalation Alarm
Recovery Action 340

**Decision Engine**

Prioritize Candidates
Calculate Confidence
Decision Engine 350

**EscEng Dashboard**

Displays DE Conf. Lvls
ExFr Log Actions
Feedback Info 380

**EscEng Configuration**

Confidence Attribute
Escalation Policies 390
Recovery Definitions

**FIG. 3**

115

**FIG. 4**

FIG. 5

FIG. 6

~ 700

Start

↓

Monitor network for alarms associated
with alarm conditions 710

↓

Assign alarm conditions to escalation-type
categories 720

↓

Alarm Condition(s) satisfies
escalation criterion of
assigned category?
730

No → END

Yes ↓

Trigger escalation action
740

→ END

FIG. 7

EP 4 672 690 A1

26

FIG. 8

Prioritize Candidates 810

Perform Alarm Analytics 820

Alarm
Condition Satisfies
Confidence Interval
Requirement?
830

Yes

No

Escalate Alarm Level?
840

Yes

No

Perform
Recovery Action?
850

Yes

No

Generate
"Escalation Alarm"?
860

Yes

No

Transmit Message to Execution Framework 870

END

~ 800

**FIG. 9**

Start → Generate Dashboard GUI 910 → Display Confidence Levels 920 → Display Execution Framework Actions/Logs 930 → Display Feedback Information 940 → END

900

FIG. 10

**FIG. 11**

Europäisches
Patentamt
European
Patent Office
Office européen
des brevets

# EUROPEAN SEARCH REPORT

**Application Number**

EP 25 18 2898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/057850 A1 (KRAUS NAAMA [IL] ET AL) 20 February 2020 (2020-02-20) <br> * paragraph [0030] - paragraph [0035] * <br> * paragraph [0165] - paragraph [0170] * <br> * paragraph [0214] * <br> * paragraph [0237] - paragraph [0238] * <br> * paragraph [0246] - paragraph [0272] * <br> * paragraph [0301] - paragraph [0305] * <br> * paragraph [0311] - paragraph [0317] * <br> * paragraph [0322] - paragraph [0324]; figure 1 * <br> ----- | 1-15 | INV. <br> H04L41/0604 <br> H04L41/0654 <br> H04L41/16 <br> H04L41/5074 <br> H04L41/0631 |
| X <br><br> A | US 11 580 842 B1 (HAUSER STEVEN [US] ET AL) 14 February 2023 (2023-02-14) <br> * column 12 - column 16 * <br> * column 24 * <br> * column 26 * <br> * column 28 - column 29; figures 3-4 * <br> ----- | 1,3, 7-12,14 <br><br> 2,4-6, 13,15 | |
| | | | **TECHNICAL FIELDS SEARCHED (IPC)** <br><br> H04L <br> G06N |

The present search report has been drawn up for all claims

| Place of search | Date of completion of the search | Examiner |
|---|---|---|
| Munich | 9 October 2025 | Camba, Sonia |

EPO FORM 1503 03.82 (P04C01)

## ANNEX TO THE EUROPEAN SEARCH REPORT
## ON EUROPEAN PATENT APPLICATION NO.

EP 25 18 2898

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | Publication date | Patent family member(s) | Publication date |
|---|---|---|---|
| US 2020057850 A1 | 20-02-2020 | CN 112602081 A | 02-04-2021 |
| | | EP 3841502 A1 | 30-06-2021 |
| | | US 2020057850 A1 | 20-02-2020 |
| | | WO 2020040878 A1 | 27-02-2020 |
| US 11580842 B1 | 14-02-2023 | NONE | |

EPO FORM P0459

For more details about this annex : see Official Journal of the European Patent Office, No. 12/82